Europäisches Patentamt

European Patent Office

Office européen des brevets

(11) Publication number: **0 044 726**

**A1**

(12) **EUROPEAN PATENT APPLICATION**

(21) Application number: **81303292.7**

(22) Date of filing: **17.07.81**

(51) Int. Cl.³: **H 02 G 15/24**

(30) Priority: **21.07.80 GB 8023785**

(43) Date of publication of application:
**27.01.82 Bulletin 82/4**

(84) Designated Contracting States:
**AT BE CH DE FR GB IT LI LU NL SE**

(71) Applicant: **BICC Limited**
**21, Bloomsbury Street**
**London, WC1B 3QN(GB)**

(72) Inventor: **Henderson, John Thomas**
**6 The Spires Wilmington**
**Dartford Kent(GB)**

(72) Inventor: **Hickman, Anthony**
**Etche-ona Wrotham Road**
**Meopham Kent(GB)**

(72) Inventor: **Gregory, Brian**
**62 Knole Road**
**Dartford Kent(GB)**

(72) Inventor: **Jeffs, Malcolm Denis**
**54 Peareswood Road**
**Erith Kent, DA8 2HP(GB)**

(74) Representative: **Poole, Michael John et al,**
**BICC Limited Patents Department 38 Wood Lane**
**London, W12 7DX(GB)**

(54) **Electric cable terminations.**

(57) In a termination for a fluid-filled cable, the insulator 2 has an imperforate metal end-fitting 3 so that the risk of leakage of fluid into or out of the cable is negligible, whichever direction the pressure differential may be in - this makes the termination especially suitable for pressurised gas switchgear. A terminal 6 on the cable conductor end is connected to the end-fitting 3 by a plug-and-socket joint 4 and 5, and there is also a direct shoulder to shoulder engagement to transmit compressive forces. A latching mechanism comprising for example retractable pins 7 which ride up camming surfaces 10 and engage shoulders behind them, holds the plug-and-socket engaged against tensile forces.

./...

Fig.1.

## ELECTRIC CABLE TERMINATIONS

This invention relates to electric cable terminations, and more particularly to terminations for fluid-filled (oil- or gas-filled) cables. As used herein, the expression "termination" includes a fluid-tight joint between two such cables allowing them to operate at different pressures. More especially, but not exclusively, it relates to terminations that are suitable for terminating such cables into pressurised chambers, such as the enclosures of switchgear filled with sulphur hexafluoride, nitrogen or other insulating gas under pressure, or into oil-filled chambers, as of transformers.

It is a requirement in such terminations to maintain a fluid-tight seal between the fluid in the cable and that in the pressurised chamber or otherwise adjoining the termination (including the ambient atmosphere). In current practice this is done by enclosing the end of the cable in a tubular insulator through the free end of which a conductive fitting on the end of the cable conductor passes and to which it is clamped and sealed using elastomeric sealing rings. A disadvantage of this arrangement is that there is a small but not negligible risk of leakage, and this often imposes a requirement for the pressure in the end portion of the cable to be higher than that of the adjoining fluid, which often means higher than the pressure at which the remainder of the cable operates. This can only be done by adding to the system a stop joint to delimit the high-pressure section of the cable and a special, high pressure fluid tank with associated ducting, and is likely to require also a section of cable with a specially strong sheath.

- 2 -

Attempts have been made to overcome these problems by providing an imperforate metal end-fitting on the insulator, so effecting a reliable fluid-tight seal, and then connecting the cable conductor to that end-fitting internally by a plug-and-socket connection. Such attempts have failed hitherto owing to the considerable longitudinal forces to which such terminations are subject (a typical oil-filled cable, with a conductor cross-section of 2000 mm$^2$, may be subject to thermal and other compresive forces of up to around $6 \times 10^4$ N (6 tonnes weight) and tensile forces up to around $10^4$ N (1 tonne)).

In accordance with the present invention, a fluid-filled-cable termination comprises: a tubular insulator open at one end and including an imperforate metallic end fitting that forms a fluid-tight seal at the other end, this tubular insulator surrounding an end portion of the cable from which the sheath has been removed; a terminal on the end of the cable conductor inside the tubular insulator; a plug-and-socket connection between the said end-fitting and the terminal; a pair of bearing surfaces, one on the terminal and one on the tubular insulator, that engage to transmit compressive forces; resilient latching means on the tubular insulator and the terminal which transmit tensile forces when engaged; and a fluid-tight seal between the open end of the tubular insulator and the sheath of the cable.

Preferably the shoulder on the insulator is formed as part of the metallic end-fitting, but it could be on the insulating body thereof if it is sufficiently strong. Similarly the part of the resilient latching means carried by the insulator is preferably but not necessarily on the metallic end-fitting.

Preferably the latching means is releasable so as to allow the termination to be dismantled for inspection, cleaning, the replacement of faulty parts etc, but this is not essential in all cases. A preferred latching mechanism comprises at least one locking member moveable transversely of the cable axis in a guideway in one of the parts and biassed by a spring or other means towards the other part, which has a camming surface positioned to move the locking member against the biassing force during assembly until the locking member passes over a shoulder on the said other member and then release it into contact with that shoulder. Preferably the shoulder and the camming surface are annular except for the provision of at least one gap for the (or for each) locking member which is not normally aligned with the locking member but which can be brought into alignment with the locking member by relative rotation between the insulator and the cable end to release the latching engagement when required. Preferably there are at least two locking members and when there is more than one they are preferably symmetrically arranged about the cable axis. Preferably the guideway is in the terminal rather than in the insulator.

The invention is illustrated by the drawings in which:

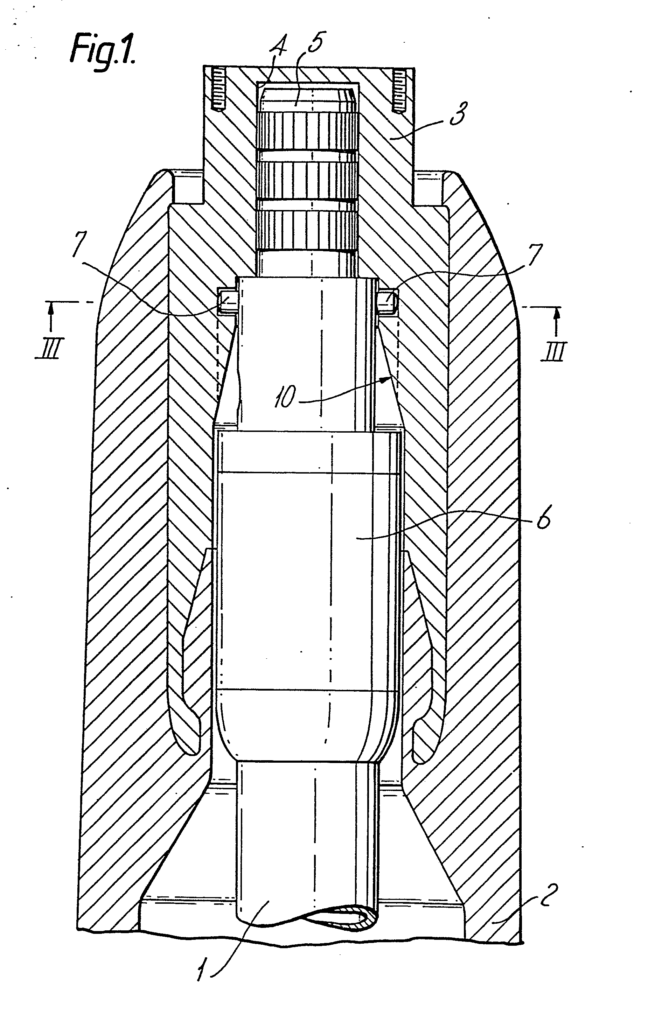

FIGURE 1 is a longitudinal cross-section of the distinctive end portion of a preferred form of termination in accordance with the invention;

FIGURE 2 is a further cross-section, on a larger scale, showing the latching mechanism in more detail;

FIGURE 3 is a transverse cross-section on the line III-III in figure 1 (not shown to scale); and

FIGURE 4 is a sketch showing one particular application of the termination, namely in termination of an oil-filled cable to switchgear filled with a compressed gas.

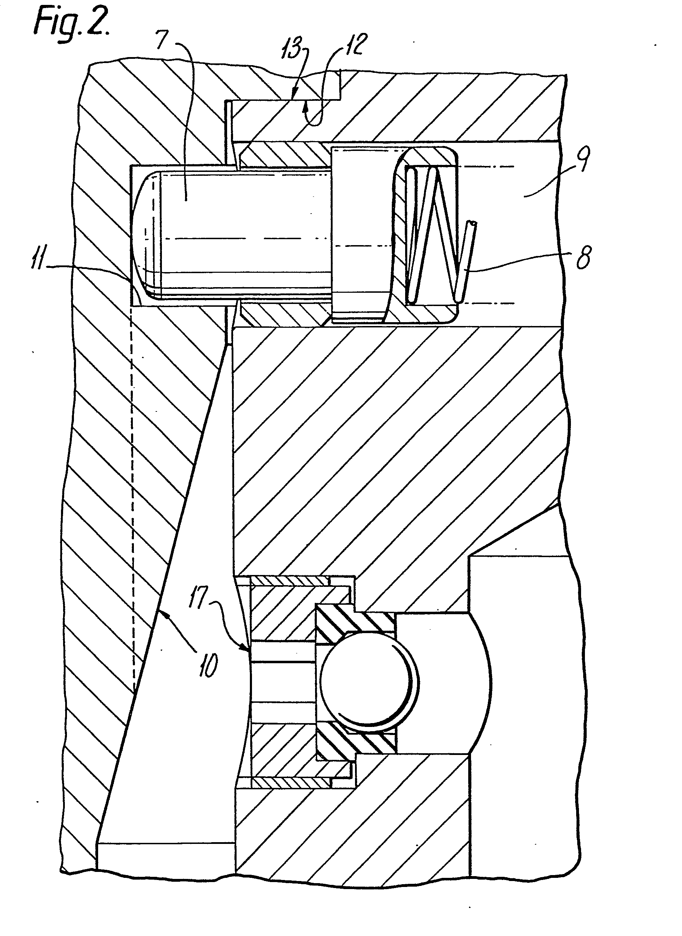

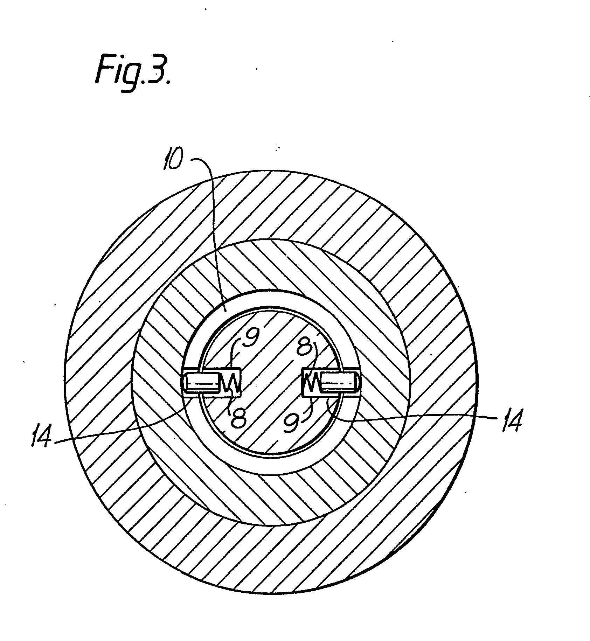

In the drawings, the cable end 1 from which the sheath has been removed is enclosed by the tubular insulator 2 incorporating metal end-fitting 3 hermetically sealed to the body of the insulator; for example the end-fitting may be of aluminium and directly embedded in a cast epoxy resin body. The end-fitting 3 forms a socket 4 which receives a plug 5 of conventional design on the terminal 6, which is crimped or otherwise connected to the cable conductor. The terminal 6 also supports two locking member in the form of pins 7 (figures 2 and 3) located diametrically opposite each other. Each pin is biassed outwardly by a spring 8 but is completely retractable into a cylindrical guideway 9 in the terminal 6.

During assembly, the insulator is suitably oriented and presented axially to the terminal on the prepared cable end. The plug 5 and socket 4 engage first and ensure that the latching pins operate independently and are equally loaded. Each pin first engages a respective adjacent part of a generally annular camming surface 10 which causes it to be retracted into its guideway 9 until it passes over and engages a locking shoulder 11 which it thereafter engages to secure the termination against withdrawal of the plug from the socket. Simultaneously shoulders 12 and 13 (figure 2) are engaged to transmit compressive forces.

To withdraw the plug from the socket if required, the insulator is rotated (after freeing its other end from the cable sheath) to bring the latching pins into the position shown in figure 3 in which they are aligned with channels 14 extending through the solid annulus otherwise bounded by the shoulder 11 and camming surface 10.

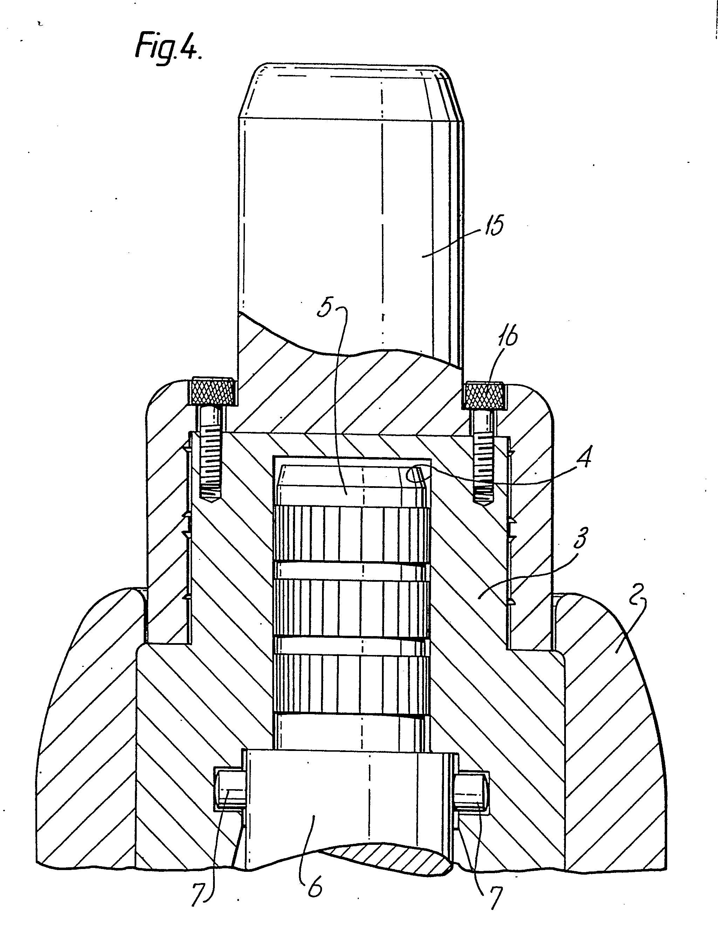

Figure 4 shows a take-off connector adaptor 15 mounted on the end-fitting 3 with screws 16, for making a connection from an oil-filled cable to a bus-bar, for instance in switchgear filled with compressed gas. By using a range of simple adaptors such as the one shown, a common insulator may be used to meet the requirements of a wide range of switchgear and other equipment. Maximum versatility in this respect is secured by making the metal end-fitting 3 as short as possible.

A secondary benefit of the invention is that a drop-out valve 17 (figure 2) is accessible for maintenance if required.

CLAIMS

1.      A fluid-filled cable termination comprising: a tubular insulator open at one end and including an imperforate metallic end fitting that forms a fluid-tight seal at the other end, this tubular insulator surrounding an end portion of the cable from which the sheath has been removed; a terminal on the end of the cable conductor inside the tubular insulator; a plug-and-socket connection between the said end-fitting and the terminal; and a fluid-tight seal between the open end of the tubular insulator and the sheath of the cable characterised by the provision of a pair of bearing surfaces, one on the terminal and one on the tubular insulator, that engage to transmit compressive forces, and resilient latching means on the tubular insulator and the terminal which transmit tensile forces when engaged.

2.      A termination as claimed in Claim 1 characterised in that the shoulder on the insulator is formed as part of the metallic end-fitting.

3.      A termination as claimed in Claim 1 or Claim 2 characterised in that the part of the resilient latching means carried by the insulator is on the metallic end-fitting.

4.      A termination as claimed in any one of the preceding claims characterised in that the latching mechanism comprises at least one locking member moveable transversely of the cable axis in a guideway in one of the parts and biassed by a spring or other means towards the other part, which has a camming surface positioned to move the locking member against the biassing force during assembly until the locking member passes over a shoulder on the said other member and then release it into contact with that shoulder.

5.      A termination as claimed in Claim 4 characterised in that the shoulder and the camming surface are annular except for the provision of at least one gap for the (or for each) locking member which is not normally aligned with the locking member but which can be brought into alignment with the locking member by relative rotation between the insulator and the cable end to release the latching engagement when required.

6.      A cable termination substantially as described with reference to and as shown in Figures 1 to 3.

Fig.1.

*Fig.2.*

0044726

Fig.3.

*Fig.4.*

European Patent Office

**EUROPEAN SEARCH REPORT**

Application number

EP 81 30 3292

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| | <u>CH - A - 509 513</u> (PASBRIG) <br> * The whole document * | 1,3-6 | H 02 G 15/24 |
| | <u>US - A - 1 485 215</u> (COAR) <br> * Page 1, lines 43-74; figures 1-4 * | 1-4,6 | |
| A | PROCEEDINGS OF THE INSTITUTION OF ELECTRICAL ENGINEERS, vol. 123, no. 3, March 1976 <br> Stevenage, Herts, GB <br> F.J. MIRANDA et al.: "Self-contained oil-filled cables. A review of progress", pages 229-238 <br><br> * Page 234, right-hand column, paragraphs 8-10; page 235, left-hand column, paragraphs 1-4; figure 13 * | 1,6 | **TECHNICAL FIELDS SEARCHED (Int. Cl.³)** <br><br> H 02 G 15/24 <br>          15/22 <br> H 01 R 13/20 <br> H 02 B 11/04 |
| A | ELECTRICAL COMMUNICATION, vol. 49, no. 4, 1974 <br> London, GB <br> "Oil-filled cable sealing ends to SF6 busbar systems", page 454 <br><br> * Page 454, right-hand column, paragraphs 1-4 * | 1,6 | **CATEGORY OF CITED DOCUMENTS** <br><br> X: particularly relevant <br> A: technological background <br> O: non-written disclosure <br> P: intermediate document <br> T: theory or principle underlying the invention <br> E: conflicting application <br> D: document cited in the application <br> L: citation for other reasons <br><br> &: member of the same patent family, corresponding document |

| | The present search report has been drawn up for all claims | |
|---|---|---|
| Place of search <br> The Hague | Date of completion of the search <br> 23-10-1981 | Examiner <br> LOMMEL |